# EUROPEAN PATENT APPLICATION

(11) **EP 2 179 938 A1**
(43) Date of publication of application: **28.04.2010**
(21) Application number: 08253482.7
(22) Date of filing: 24.10.2008
(51) Int. Cl.: B65D 41/02, A01K 97/08

(54) **Fishing rod enclosure with magnetic closure system**

(71) Applicant: Hui, Jason K., East Palo Alto CA 94303 (US)
(72) Inventor: Hui, Jason K., East Palo Alto CA 94303 (US)
(74) Representative: Gosnall, Toby

(57) **Abstract**

The present invention provides for an enclosure (100) having first and second interconnecting bodies, each body having a closed end and an open end. A first sleeve (114) having a first grip portion (118) and an insertion portion (200) is attached to the open end of the first body (102) of the enclosure. A second sleeve (116) having a second grip portion (120) is attached to the open end of the second body (104) of the enclosure. The insertion portion of the first sleeve is configured to mate with the second sleeve. Magnets (224) are mounted within cavities formed into the ends (216,218) of the grip portions such that when the bodies of the enclosure are interconnected, the exposed ends of the magnetic members abut one another, thus producing an attractive magnetic force which aids in maintaining the connection of the two bodies (102,104) of the enclosure.

## Description

### Field of the Invention

The present invention relates to an enclosure and in particular to an enclosure having two bodies. Still more particularly, the present invention provides for an enclosure having two interconnecting bodies which maintain their connection by magnetic means.

### Description of the Related Art

Fly fishing is an outdoor sport enjoyed by many people around the world. Those who participate in the sport of fly fishing often obtain specialized fishing rods and reels which enable them to practice fly fishing techniques that would otherwise be very difficult to replicate with other types of rods and reels. Most fly fishing rods are relatively light in weight, as the rod must be whisked back and forth when practicing traditional casting techniques. Many fly fishing rods are susceptible to damage incurred during transport to and from the fishing site. The rod tip, which is usually configured to include an eyelet through which line passes, is found on the end of the fishing rod that is most distal to the end held by the user. The rod tip, usually being relatively thin, is often especially susceptible to damage caused by mishandling of the rod and may be very expensive to repair.

Various types of enclosures configured to house and protect fly fishing rods are revealed in the prior art. The prior art also reveals enclosures featuring various systems for opening and closing said enclosures. Some of these systems include threaded lids, hinged doors, and the like. Many fishing rod enclosures are configured to include a main tube body with an opening at one end, the inner surface of said opening having threaded grooves capable of receiving a correspondingly threaded lid. Said enclosures are configured to be opened by a person twisting the lid until it disengages from the main tube body.

The closure systems revealed in the prior art can be difficult to manipulate for those who engage in the sport of fishing. The sport often involves the fisherman coming into contact with substances which act as lubricants when applied to human skin. Such lubricating substances include fish oils, water, mud, reel grease, sweat, and the like. Following a day of fishing, the surface of a fisherman's hands may be covered with a combination of said lubricating substances, thereby making it more difficult to maintain an effective grip on many objects. A fisherman whose hands have come into contact with lubricating substances may find it difficult to grasp a threaded enclosure lid and generate enough friction to turn said lid. The prior art reveals closure systems configured for use by those whose hands may be compromised in some manner.

Such a closure system is revealed in the U.S. patent application published with the number US 2005/0121015 A1. The closure system comprises a lid and an associated opening defined in an upper surface of a paintball sport item. At least one of the lid and the upper surface includes at least one of a first magnetic portion having a first magnetic polarity or a first magnetically attractable insert. The other of the lid and the upper surface of the paintball sport item include at least one of a second magnetic portion or a second magnetically attractable insert, the at least one second magnetic portion or the second magnetically attractable insert positioned to magnetically engage one of the at least one first magnetic portion and the first magnetically attractable insert when the lid is in a closed position. The closure system revealed in the prior art application is not configured such that the magnetic attraction formed between the lid and the enclosure is strong enough to support a substantial force drawing the lid and the enclosure apart. The closure system revealed in the prior art application also does not include a means for providing friction between the surfaces of the enclosure and the surfaces of the lid of the enclosure.

Many fishing rod enclosures, including enclosures featuring threaded openings, require the user to insert the fishing rod through an opening on one end of said enclosure. In order to insert their fishing rods into such enclosures, many users lower the rods down into the enclosure, eventually grasping the rod tip to support the weight of the entire fishing rod. This causes unnecessary strain on the rod tip and may eventually lead to breakage.

Therefore a need exists for an enclosure that may be easily opened and closed by those whose hands have been in contact with lubricating substances, thus making it difficult to grasp said enclosure.

A further need exists for an enclosure having two bodies, allowing a user to insert a fishing rod into the enclosure without the necessity of grasping said fishing rod at points which are more susceptible to breakage.

In order to address these and other needs not met by the prior art, the present invention provides for an enclosure with a magnetic closure system, which is more fully described below.

### SUMMARY OF THE INVENTION

A preferred embodiment of the present invention provides for an enclosure having a first hollow body configured to interconnect with a second hollow body. Both the first and the second body have a closed end, an open end, and walls having an outer edge at said open end.

The invention further provides for a first sleeve comprising a first grip portion and an insertion portion, said first sleeve is attached to the open end of the first body of the enclosure. The first grip portion and the insertion portion both include an inner surface and an outer surface. The outer surface of the first grip portion includes a means for gripping said first grip portion. The first grip portion also includes a first connecting end proximal to said insertion portion. Said first connecting end comprises a surface in which at least one cavity is formed.

The invention further provides for a second sleeve comprising a second grip portion having an inner surface and an outer surface, said second sleeve is attached to the open end of the second body of the enclosure. The outer surface of the second grip portion includes a means for gripping said second body. The second grip portion further includes a second connecting end which has a surface in which at least one cavity is formed.

The first body and the second body each have magnetic surfaces which engage each other in order to maintain the interconnection of said bodies. The magnetic surfaces are comprised of ferromagnetic materials attached to the connecting ends in a manner such that an attractive magnetic force exists between the two bodies.

The invention further provides for interconnection between the first body and the second body of the enclosure. The insertion portion of the first sleeve is configured to mate with the second grip portion and the inner surface of the wall of the second body. The outer surface of the insertion portion and the inner surface of the wall of the second body bear against one another when the first body and the second body are interconnected, thus a friction coefficient exists therebetween. When the insertion portion mates with the second body of the enclosure, the first connecting end abuts with the second connecting end, thus the exposed ends of the first magnetic surface and the second magnetic surface also abut one another, resulting in an attractive magnetic force between the first body and the second body of the enclosure. Therefore once the first body is interconnected with the second body, a user must provide a force in opposition to the attractive magnetic force and the frictional force resulting from the coefficient of friction between the outer surface of the insertion portion and the inner surface of the wall of the second body, to disconnect said bodies of the enclosure.

### BRIEF DESCRIPTION OF THE DRAWINGS

The features of the present invention can be more readily understood from the following detailed description with reference to the accompanying drawings wherein:
FIG. 1 shows a perspective view of an enclosure according to a preferred embodiment of the present invention;
FIG. 2 shows a side view of the first body and second body of the enclosure shown in FIG. 1;
FIG. 3 shows a perspective view of the first body and second body of the enclosure shown in FIG. 1;
FIG. 4 shows an end view of the first sleeve of the enclosure shown in FIG. 1;
FIG. 5 shows an end view of the second sleeve of the enclosure shown in FIG. 1;
FIG. 6 shows an end view of the first sleeve of an alternate embodiment of the present invention;
FIG. 7 shows an end view of the second sleeve of an alternate embodiment of the present invention;
FIG. 8 shows a cross sectional view of the first body and the second body of the enclosure shown in FIG. 1;
FIG. 9 shows a perspective view of the first body of an alternate embodiment of the present invention; and
FIG. 10 shows a cross sectional view of the second body of an alternate embodiment of the present invention.

Preferred and alternate embodiments of the enclosure according to the present invention will be described below in detail with reference to the accompanying drawings.

### DETAILED DESCRIPTION OF THE PREFERRED EMBODIMENTS

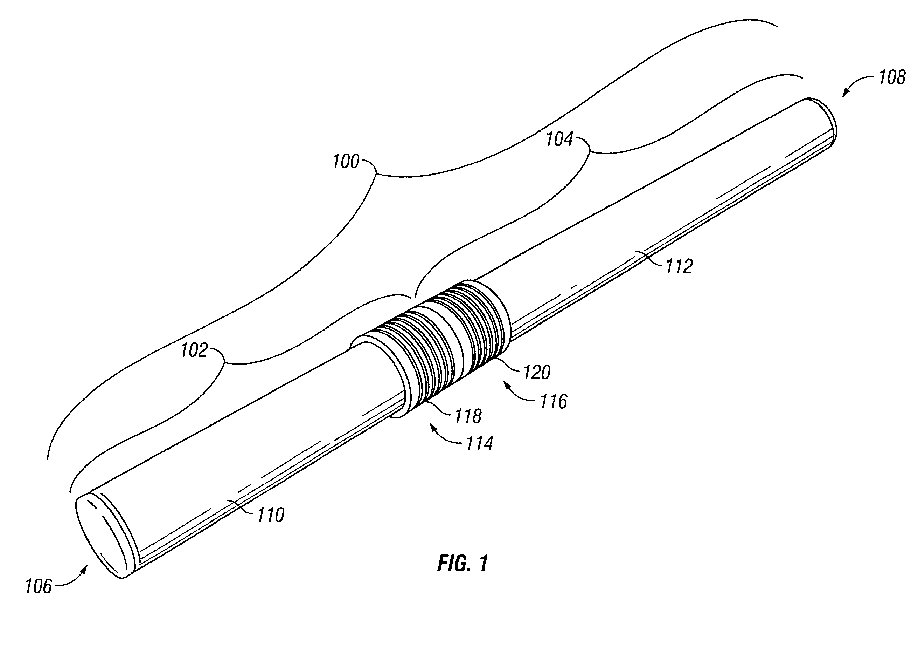

Referring to FIG. 1, which shows an enclosure 100 according to a preferred embodiment of the present invention. The enclosure 100 is comprised of a first body 102 and a second body 104 configured to interconnect with one another. It should be noted that although the first body 102 and the second body 104 of the presently preferred embodiment have substantially equal lengths, alternate embodiments of the enclosure 100 may be configured such that one of the first body 102 or the second body 104 has a substantially longer length than the other of the first body 102 or second body 104. Each of said bodies 102, 104 includes a closed end 106, 108, an open end (not shown), and a wall 110, 112 having an inner surface (not shown) and an outer surface. A first sleeve 114 is attached to the first body 102 and a second sleeve 116 is attached to the second body 104. Each sleeve 114, 116 is adjacent to the open end of the respective body 102, 104 to which it is attached. The first sleeve 114 is comprised of two portions, a first grip portion 118 and an insertion portion (not shown). The second sleeve is comprised of a second grip portion 120. The materials used to construct the enclosure 100 may include a plurality of materials capable of being formed according to that which is described and shown herein, including plastics, metals, woods, and combinations of the foregoing materials.

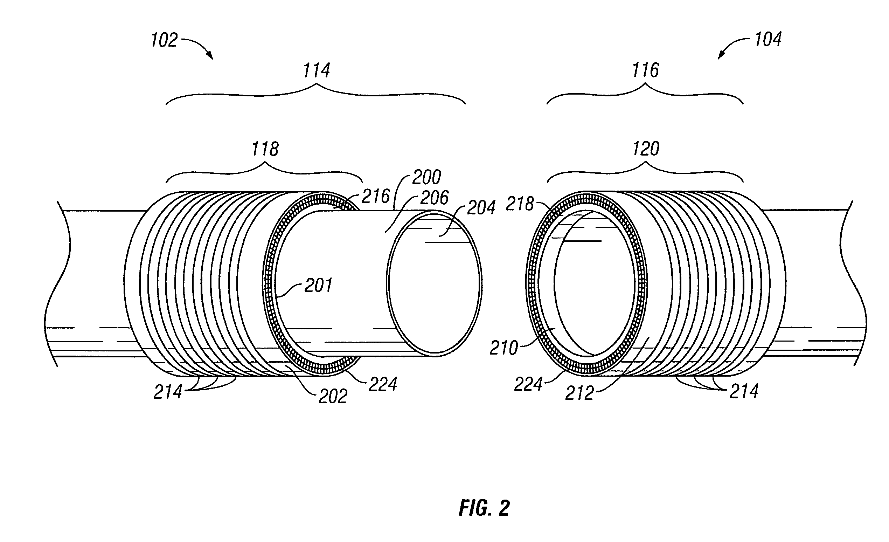

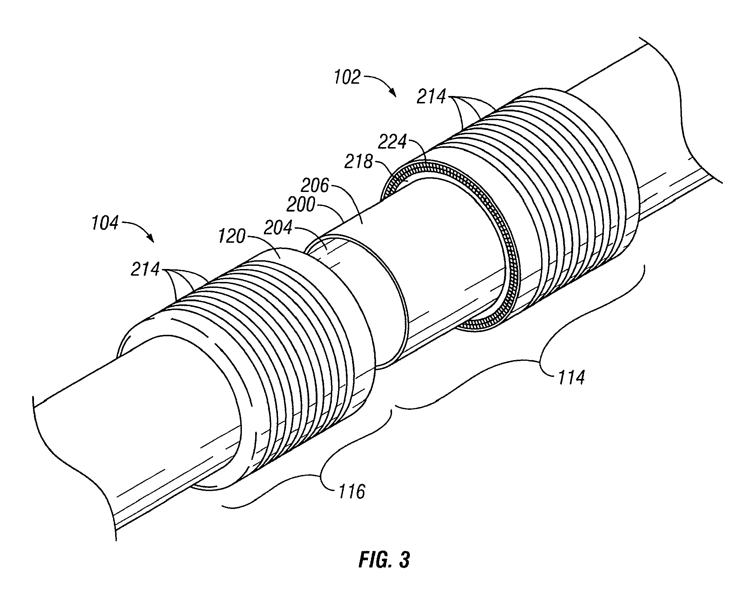

Referring now to FIG. 2 and FIG. 3, showing the first body 102 of the enclosure 100 disconnected from the second body 104 of the enclosure 100. The first grip portion 118 has an inner surface 201 and an outer surface 202. Similarly, the insertion portion 200 also has an inner surface 204 and an outer surface 206. Said outer surface 206 of the insertion portion 200 has a smaller diameter than the outer surface 202 of the grip portion 118. The insertion portion 200 is configured to be inserted into and mate with the second body 104 of the enclosure 100. The second gripping portion of the second sleeve includes an inner surface 210 and an outer surface 212. The outer surfaces 202, 212 of each of the first grip portion 118 and the second grip portion 120 include a means for gripping 214 said grip portions 118, 120. It should be noted that although the presently preferred embodiment includes threaded grooves 214 along the outer surface 202, 212 of the grip portions 118, 120 the means for gripping 214 said grip portions 118, 120 may include any of a plurality of surface features known in the prior art which are suitable for aiding in gripping said surfaces 202, 212.

The gripping portion 118 of the first sleeve 114 has a first connecting end 216 adjacent to the insertion portion 200. The gripping portion 120 of the second sleeve 116 also has a second connecting end 218 adjacent to the open end 208 of the second body 104 of the enclosure 100. The surface area of each of said connecting ends 216, 218 comprises an area lying between the outer surface 202, 212 and inner surface 201, 210 of each grip portion 118, 120 respectively.

The following definition includes various examples that fall within the scope of the term and that may be used for implementation. The examples are not intended to be limiting.

"Attractive magnetic force" as used herein, refers to the attractive force between opposite poles of two permanent magnets or between a permanent magnet and another ferromagnetic material such as steel.

Each of said first sleeve 114 and said second sleeve 116 includes a magnetic surface containing a means for providing an attractive magnetic force between said first body 102 and said second body 104 of the enclosure 100 when said bodies 102, 104 are interconnected. The means for providing an attractive magnetic force is accomplished in the preferred embodiment by mounting one or more permanent magnets 224 into the cavities (not shown) formed within the connecting ends 216, 218 of each sleeve 114, 116. The magnets 224, each having two poles of opposite polarity, are mounted into said cavities such that only one pole is exposed. Furthermore, each of the magnets 224 has two sides such that one pole is located on one side and the opposing pole is located on the other of the two sides. The side of each mounted magnet 224 containing the exposed pole is flush with the surface of the connecting end 216, 218 to which it is mounted. The magnets 224 should be mounted such that the exposed poles of the magnets 224 mounted in one of the connecting ends 216, 218 are of opposite polarity to the exposed poles of the magnets 224 mounted in the other of the connecting end 216, 218, thus when said connecting ends 216, 218 abut, an attractive magnetic force serves to attract the first body 102 to the second body 104. Although the presently preferred embodiment of the present invention utilizes permanent magnets 224 in providing the attractive magnetic force, it should be noted that alternate embodiments of the present invention may be configured such that at least one permanent magnet 224 is mounted within one of said connecting faces 216, 218 and at least one material having a relatively high magnetic permeability such as iron or steel, may be mounted within the other of the connecting ends 216, 218.

A user of the enclosure 100 will provide the force required to connect and disconnect said first and second bodies 102, 104. The connecting force may be applied by pushing the two bodies 102, 104 together simultaneously or by holding one of the two bodies 102, 104 stationary and pushing or pulling the other of the two bodies 102, 104 into said stationary body 102, 104. During the connection process, the insertion portion 200 slides within the walls 112 of the second body 104 until the first connecting end 216 abuts the second connecting end 218. As the insertion portion 200 of the first sleeve 114 slides within the walls 112 of the second body 104, the outer surface 206 of the insertion portion 200 contacts the inner surface 226 of said wall 112, resulting in friction between said surfaces 226, 112. The connecting force includes the force applied to the two bodies 102, 104 of the enclosure 100 to overcome the frictional force created by said friction between said surfaces 126, 128.

While transporting fishing rods in the interconnected enclosure 100 or otherwise handling said interconnected enclosure 100, the user may desire to grasp said enclosure 100 about the outer surface of the wall 110, 112 of the first body 102 or the second body 104, adjacent to one of the two closed ends 106, 108. Therefore, it is necessary that the interconnection between said bodies 102, 104 of the enclosure 100 is maintained by the attractive magnetic forces produced by the magnets 224 and the frictional forces resulting from the interaction of the insertion portion 200 and the second body 104. Although the presently preferred embodiment of the invention includes a continuous ring of magnets 224 mounted within cavities along each of the connecting ends 216, 218, alternate embodiments of the enclosure 100 may be configured to contain one or more magnets 224 spaced at various predefined intervals. In order to provide the enclosure 100 with the necessary attractive magnetic force to maintain the interconnection of the portions of the enclosure 100, several factors must be considered when choosing the number of magnets 100 to be mounted within the connecting ends 216, 218 of the enclosure 100. The relative strength of the magnets 224, the weight of each body 102, 104 of the enclosure 100 including the respective attached sleeves 114, 116 and mounted magnets 224, the weight of the rods to be stored, and the coefficient of friction between the insertion portion 200 and the inner surface 226 of the wall 112 of the second body 104 should all be considered in configuring the number of magnets 224 to be mounted within said first and second connecting ends 216, 218.

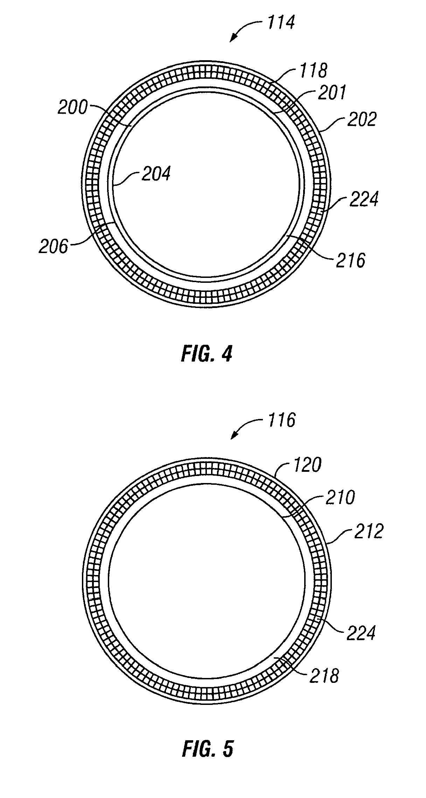

Referring to FIG. 4, an end view of the first sleeve 114. The inner surface 201 of the first grip portion 118 has a diameter only slightly larger than the diameter of the outer surface of the wall 110 of the first body 102, thus the first sleeve 114 is capable of being securely attached to said first body 102. The first connecting end 216 is located on the end of said first grip portion 114, said first connecting end 216 having a thickness defined by the difference between the outer surface 202 and the inner surface 201 of the first grip portion 118. The insertion portion 200 also has an inner surface 204 and an outer surface 206, each having a diameter smaller than the diameter of the inner surface 201 of the first grip portion 118.

Referring to FIG. 5, an end view of the second sleeve 116. The second grip portion 120 includes an inner surface 201 and an outer surface 212, each having a diameter substantially equal to the inner surface 201 and outer surface 202 of the first grip portion 118 of the first sleeve 114, respectively. However, it should be noted that alternate embodiments of the present invention may comprise first grip portions 118 having substantially different dimensions then those of the second grip portion 120. The inner surface 210 of the second grip portion 120 of the presently preferred embodiment has a diameter only slightly larger than the diameter of the outer surface of the wall 112 of the second body 104, thus the second sleeve 116 is capable of being securely attached to said second body 104. The second grip portion 120 contains a second connecting end 218 having a thickness defined by the difference between the diameter of the outer surface 212 and the diameter of the inner surface 201 of said second grip portion 120.

Referring to FIG. 4 and FIG. 5, the magnets 224 are embedded into the connecting ends 216, 218 of each of the grip portions 118, 120, said magnets 224 having only one exposed end. The presently preferred embodiment includes discrete magnetic members 224 placed adjacent to one another along the surface of each connecting end 216, 218. However alternate embodiments (not shown) may be configured to include a single ring-like magnet (not shown) embedded into each of said connecting ends 216, 218. Other alternate embodiments may include one or more magnetic members mounted into one of the two connecting ends 216, 218 and a magnetically attractable material mounted into the other of the two connecting ends 216, 218.

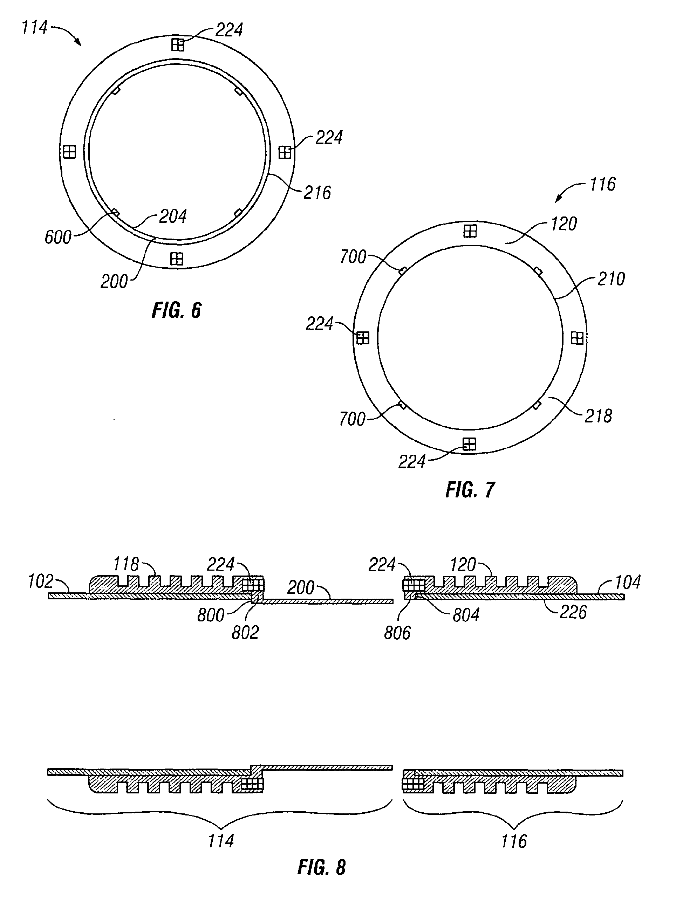

Referring to FIG. 6 and FIG. 7, end views of the first sleeve and second sleeve, said views showing alternate embodiments of the present invention. The alternate embodiments illustrated in the above referenced figures include fewer magnets 224 than the presently preferred embodiment. An enclosure 100 configuration having fewer magnets 224 may be needed if it is desired to decrease the force necessary to disconnect the two interconnected bodies 102, 104 of the enclosure 100 or if the factors previously considered in determining the number of magnets 224 to be utilized within the enclosure 100 lead to such a configuration.

The magnetic members 224 shown in the alternate embodiment are mounted into the cavities (not shown) formed within the first connecting end 216 of the first sleeve 114 and the second connecting end 218 of the second sleeve 116 at predetermined uniform intervals. The intervals by which the magnets 224 are mounted within the first connecting end 216 are configured to correspond to the placement of magnets 224 within the second connecting end 218, thus allowing the magnets 224 mounted within the first connecting end 216 to magnetically engage the magnets mounted within the second connecting end 218 when interconnected and in proper alignment. It should be noted that the placement of the magnets 224 in alternate embodiments should be symmetrical in order to prevent the unsymmetrical coupling of the two bodies 102, 104 of the enclosure 100.

A means of aligning said magnets 224 is contained in the alternate embodiment of the present invention shown in FIG. 6 and FIG. 7. The means for aligning said magnets 224 includes a plurality of raised tabs 600 attached to the inner surface 204 of the insertion portion 200, said tabs 600 being configured to mate with channels 700 formed within the inner surface 210 of the second grip portion 116 and the inner surface of the wall 226 of the second body 104. The inclusion of said raised tabs 600 and corresponding channels 700 provides a means for properly aligning the magnets 224. Other means for aligning said magnets 224 may be implemented in alternate embodiments of the present invention. Other alignment features may include visible markings (not shown) along the surfaces of the bodies 102, 104 such that the markings may be aligned by the user during connection in order to ensure that the magnets 224 are also properly aligned.

Referring to FIG. 8, a cross sectional view of the first body and the second body of a preferred embodiment of the invention is shown. The insertion portion 200 extending from the first grip portion 118 is configured to mate with the second body 104 of the enclosure 100 by sliding within the inner surface 226 of the walls 112 of said second body 104. The first sleeve 114 is attached to the first body 102 of the enclosure 100 and the second sleeve 116 is attached to the second body 104 of the enclosure 100. The sleeves 114, 116 may be configured as separate components and later attached to their respective bodies 102, 104, or be formed as part of the respective body 102, 104 during fabrication. The outer edge 800 of the wall 110 of the first body 102 abuts an inwardly extending shoulder 802 connecting the grip portions 118 to the insertion portion 200. Similarly, the outer edge 804 of the wall 112 of the second body 104 abuts an inwardly extending shoulder 806 of the second grip portion 120. Said shoulders 802, 806 aid in securely mounting said sleeves 114, 116 to their respective enclosure bodies 102, 104.

The magnets 224 are mounted within the connecting ends 216, 218 of the grip portions 118, 120 such that only one end of each of said magnets 224 is exposed. Said magnets 224 produce the attractive magnetic force that aids in maintaining the interconnection of the two bodies 102, 104. As those skilled in the art will appreciate, the attractive magnetic force will vary based on many factors including the relative magnetic properties of the magnets 224, the exposed surface area of each of the magnets 224, the length of each magnets 224, and the distance by which the magnets 224 are separated. The maximum attractive magnetic force will exist when the magnets 224 abut one another, thus providing one of the two forces configured to maintain the interconnection of the two bodies 102, 104 of the enclosure 100. During disconnection, a pulling force is applied by the user to the grip portions 118, 220 or the walls 110, 112 of the bodies 102, 104 of the enclosure 100 in order to oppose the attractive magnetic force as well as the frictional force generated between the outer surface 206 of the insertion portion 200 and the second body 104. The attractive magnetic force and the frictional force both aid in maintaining the interconnection between the first body 102 and the second body 104 of the enclosure 100 such that disconnection will not occur unless a user provides the requisite disconnection force.

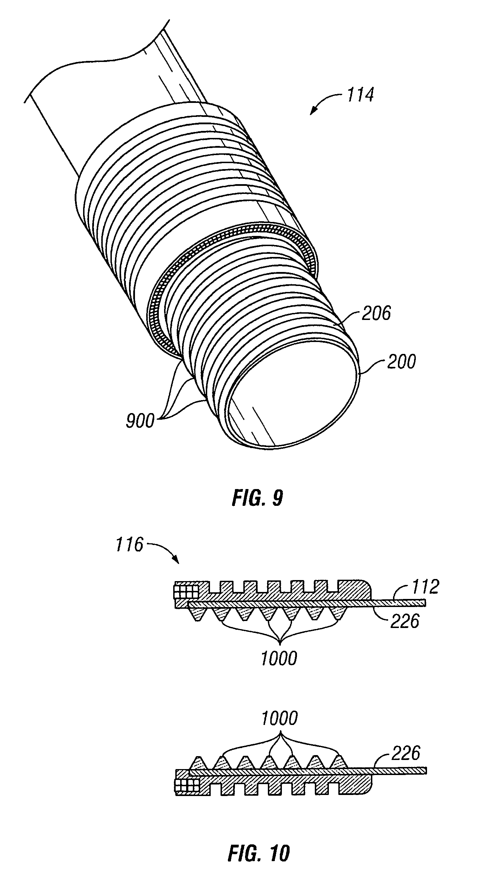

Referring to FIG. 9 and FIG. 10, alternate embodiments of the present invention having means for increasing the coefficient of friction between the outer surface 206 of the insertion portion 200 and the inner surface 226 of the wall 112 of the second body 104. The alternate embodiment contains grooves 900 along the outer surface 206 of the insertion portion 200 configured to interact with grooves 1000 found along the inner surface 226 of the wall 112 of the second body 104. Said insertion portion grooves 900 engage with said wall grooves 1000, thus increasing the coefficient of friction therebetween. Further alternate embodiments of the present invention may include other means for increasing the friction between the two surfaces 206, 226.

It should be noted that the descriptions and embodiments disclosed herein are not exhaustive and are illustrative only. Many modifications and variations will be apparent to those of ordinary skill in the art. Accordingly, the protection sought herein is as set forth in the claims below.

## Claims

1. An enclosure comprising:
(a) a first hollow body including a first portion, a grip portion and a reduced diameter insertion portion; and
(b) a second hollow body for engaging the first hollow body wherein the reduced diameter insertion portion is insertable into an open end of the second hollow body;
wherein the grip portion has a first magnetic surface for engaging a second magnetic surface attached to said second hollow body.

2. The enclosure of claim 1 wherein said first magnetic surface and said second magnetic surface each comprises at least one permanent magnet.

3. The enclosure of claim 1 wherein one of said first magnetic surface or said second magnetic surface comprises at least one permanent magnet and the other of said first magnetic surface or second magnetic surface comprises at least one magnetically attractable material.

4. The enclosure of claim 1, further comprising a means for aligning said first hollow body with said second hollow body.

5. The enclosure of claim 4 wherein said means for aligning said first hollow body with said second hollow body includes a plurality of raised tabs attached to an outer surface of said insertion portion, said raised tabs adapted for engaging a plurality of slots formed within an inner surface of said second hollow body.

6. The enclosure of claim 1, further comprising a means for providing an increased coefficient of friction between an outer surface of said insertion portion and an inner surface of said second hollow body.

7. The enclosure of claim 1 wherein one of the first hollow body or the second hollow body has a substantially greater length than the other of the first hollow body or the second hollow body.

8. The enclosure of claim 1 wherein the first hollow body has a length substantially equal to the length of the second hollow body.

9. The enclosure of claim 1 wherein at least one of the first hollow body or the second hollow body includes a means for controllably venting air from said enclosure.

10. The enclosure of claim 1 wherein said first hollow body and said second hollow body are generally cylindrical in shape.

11. The enclosure of claim 1 wherein said first hollow body and said second hollow body are each sized to contain at least one fishing rod.

12. The enclosure of claim 1 wherein a grip surface is formed on each of said grip portion and said second hollow body.
